# EUROPÄISCHE PATENTSCHRIFT

(11) **EP 1 369 018 B1**
(45) Veröffentlichungstag und Bekanntmachung des Hinweises auf die Patenterteilung: **17.06.2009**
(21) Anmeldenummer: 03008520.3
(22) Anmeldetag: 12.04.2003
(51) Int. Cl.: A01D 17/10, B65G 15/52

(54) **Förderband**
Belt conveyor
Bande transporteuse

(30) Priorität: 25.05.2002 DE 20208209 U
(43) Veröffentlichungstag der Anmeldung: 10.12.2003
(73) Patentinhaber: Grimme Landmaschinenfabrik GmbH & Co. KG, 49401 Damme (DE)
(72) Erfinder: Brintrup, Hermann-Josef, 49401 Damme (DE)
(74) Vertreter: Busse & Busse Patentanwälte

(56) Entgegenhaltungen:
- EP-A- 0 747 303
- DE-A- 3 338 792
- DE-A- 3 506 145
- US-A- 4 023 671

## Beschreibung

Die Erfindung betrifft ein Förderband, insbesondere Siebförderband für Hackfruchterntemaschinen wie Kartoffelernternaschinen gemäß dem Oberbegriff des Anspruchs 1.

Bekannte Förderbänder haben zwei oder mehr parallel zueinander umlaufende, antreibbare Trägerriemen, die untereinander durch in regelmäßigen Abständen über die Länge der Trägerriemen verteilt angeordnete Querstäbe verbunden sind. Die Querstäbe sind an ihren Enden oder bei breiten Förderbändern mit Mittelriemen auch in ihrer Mitte mit Abplattungen versehen und sind im Bereich der Abplattungen mit den Trägerriemen vernietet. Ein Beispiel findet sich in der Schrift EP 0 747 303 A1. Weitere Beispiele finden sich in den Schriften US-A-4 023 671 und DE-A-33 38 792.

Bevor die Abplattungen vorgenommen werden, wird der Querstabdurchmesser in dem anschließend abzuplattenden Bereich durch Stauchen vergrößert, damit die Abplattungen nach Anbringen der Nietlöcher genügend Festigkeit für die Aufnahme der Belastungen im Betrieb des Förderbandes darbieten. Die Abplattungsbereiche haben dabei über ihre Länge eine im wesentlichen gleichmäßige Breite, die größer ist als der Stabdurchmesser, und eine gleichmäßige Höhe, die geringer ist als der Stabdurchmesser.

Im Betrieb des Förderbandes werden die Querstäbe auf Biegung beansprucht, und zwar sowohl in Richtung parallel zur Oberseite der Trägerriemen, als auch senkrecht hierzu. Da in den Abplattungsbereichen der Biegewiderstand erheblich größer ist als in den angrenzenden Stabbereichen, werden die Übergangsbereiche von den Abplattungen zu den unverformten Querstabbereichen besonders hohen Belastungen bei ständigen Lastwechseln ausgesetzt, die zu Brucherscheinungen in den Übergangsbereichen Anlaß geben. Um solchen Brucherscheinungen entgegenzuwirken, ist es bekannt, die Querstäbe zu härten, was aber mit einer Herabsetzung der Biegeeigenschaften der Querstäbe einhergeht. Verstärkt wird die Bruchgefahr in den Übergangsbereichen von den Abplattungen in die unverformten Stabbereiche durch die Verwendung von Nietplatten an der Unterseite der Trägerriemen, die notwendig sind, um ein Durchziehen der Niete bei Belastungen der Nietverbindungen zu vermeiden. Besonders stark sind diesen Beanspruchungen die Querstäbe von Förderbändern großer Breite ausgesetzt, bei denen die Stäbe nicht nur an den äußeren Trägerriemen, sondern auch im Bereich einer mittleren Abplattung mit einem Mittelriemen verbunden sind. Bei derartigen Förderbändern konzentrieren sich die Belastungen und Lastwechsel in besonderem Maße auf die Übergangsbereiche von den Abplattungen zu den auf beiden Seiten angrenzenden unverformten Stabbereichen.

Die Erfindung befaßt sich mit dem Problem, die Belastbarkeit und die Standfestigkeit der Querstäbe in Förderbändern der genannten Art zu verbessern und dabei den Querstäben eine Biegsamkeit vorzugeben, wie sie für ein optimales Arbeiten der Förderbänder jeweils erwünscht ist.

Die Erfindung löst das Problem mit den Merkmalen des Anspruchs 1. Hinsichtlich wesentlicher weiterer Ausgestaltungen wird auf die Ansprüche 2 bis 8 verwiesen. Das Förderband nach der Erfindung schafft durch die Verwendung von Nietplattenteilen auf der den Querstäben abgewandten Seite des Trägerriemens, die durch ein elastisch verformbares Übergangsteil miteinander verbunden sind, eine bedeutsame Verstärkung der Querstäbe im Bereich der Befestigung an einem Förderband, die jedoch durch ihre ElastiZität Belastungsspitzen in den Übergangsbereichen von den Abplattungen zu den benachbarten unverformten Stabbereichen verringert. Dadurch wird eine verbesserte Biegsamkeit geschaffen, da die Nietenden nicht durch eine gemeinsame Nietplatte relativ zueinander festgelegt sind, sondern sich relativ zueinander bewegen können, so daß Biegebewegungen der an die abgeplatteten Verbindungsbereiche angrenzenden Stabbereiche keine Behinderung erfahren.

Weitere Einzelheiten und Wirkungen ergeben sich aus der nachfolgenden Beschreibung und der Zeichnung, in der Ausführungsbeispiele des Gegenstands der Erfindung schematisch näher veranschaulicht sind. In der Zeichnung zeigen:

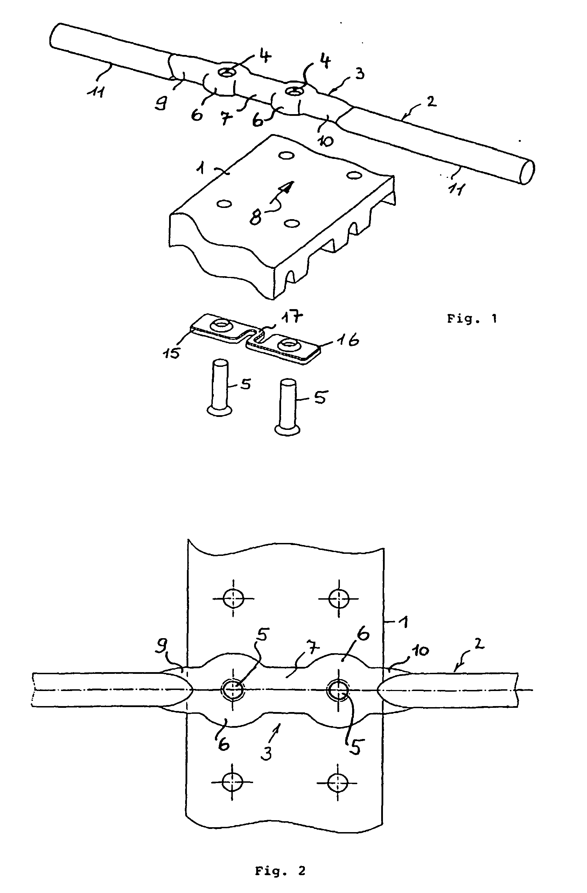

- Fig. 1: in einer abgebrochenen Explosionsdarstellung den Verbindungsbereich zwischen einem mittleren Trägerriemen eines Förderbandes nach der Erfindung und einem Querstab,
- Fig. 2: eine Draufsicht auf die in Verbindungsstellung befindlichen Teile der Fig. 1, und
- Fig. 3 bis 10: verschiedene Abstützungen der Verbindungsniete auf der den Querstäben abgewandten Seite der Trägerriemen.

Das in der Zeichnung nur ausschnittsweise dargestellte Förderband umfaßt zwei, drei oder mehr parallel zueinander umlaufende, antreibbare Trägerriemen 1, die untereinander durch in Abständen über die Länge der Trägerriemen 1 verteilt angeordnete Querstäbe 2 verbunden sind. Die Zeichnung veranschaulicht im Ausschnitt lediglich einen einzigen Trägerriemen 1 und im Ausschnitt lediglich einen einzigen Querstab 2, wobei es sich bei dem dargestellten Trägerriemen 1 um einen Mittelträgerriemen oder einen zwischen den beiden Außenriemen befindlichen Innenträgerriemen handelt. Der Querstab 2 hat eine Ausbildung, wie sie (neben der Verbindung mit den Außenträgerriemen) für eine Verbindung mit einem Innenträgerriemen 1 vorgesehen ist.

Förderbänder mit zwei oder mehr Trägerriemen 1 und Querstäben 2 als Fördergutauflage sind in vielfältigen Ausführungen bekannt. Sie finden beispielsweise als Siebförderbänder in Hackfruchtemtemaschinen, insbesondere Kartoffelamtemaschinen, Anwendung.

Die Querstäbe 2 sind jeweils in jenen Bereichen, in denen sie mit einem Trägerriemen 1 verbunden sind, mit Abplattungen 3 versehen, die insbesondere für eine Nietverbindung mit einem Mittel- bzw. Innenträgerriemen 1 eine besondere Ausbildung haben. Diese Ausbildung kann auch für die Nietverbindung der Außenenden der Querstäbe 2 mit den Außenträgerriemen 1 vorgesehen sein.

Bei den Abplattungen 3 ist jedes einen Niet 5 aufnehmendes Nietloch 4 von einem besonderen Abplattungsbereich 6 umgeben, wobei zwischen benachbarten Abplattungsbereichen 6 ein ebenfalls abgeplatteter Zwischenbereich 7 vorgesehen ist, der einen gleichen oder geringeren Biegeverformungswiderstand darbietet. Bei dem dargestellten Ausführungsbeispiel weist der Zwischenbereich 7 eine geringere Querschnittsabmessung auf, wobei er jedoch ober- und unterseitig mit den Ober- und Unterseiten der benachbarten Abplattungsbereiche 6 fluchtet und in Bandlaufrichtung 8 eine geringere Breite aufweist. Dementsprechend bieten die Abplattungen 3 mit ihren Zwischenbereichen 7 Zonen erhöhter Biegsamkeit dar, so daß Biegeverformungen der Querstäbe 2 in ihren unverformten Bereichen 11 nicht nur durch die Übergangsbereiche 9,10 zu den Enden der Abplattung 3 hin, sondern auch in den Zwischenbereichen aufgenommen werden können mit der Folge einer deutlichen Entlastung der Übergangsbereiche 9,10. Dies gilt in besonderem Maße für Nietverbindungen mit Mittel- bzw. Innenträgerriemen, ist jedoch auch für die entsprechenden endseitigen Nietverbindungen der Querstäbe 2 bedeutsam.

Die gesonderten Abplattungsbereiche 6 sind durch abplatten des Verformens von zuvor gebildeten Stauchungsbereichen annähernd kugeliger Grundform in den Querstäben 2 gebildet und haben dementsprechend eine bereichsweise von Kreisbögen gebildete Kontur. Für die Bildung einer jeder Abplattung 3 wird zunächst ein erster Stauchungsbereich für einen ersten Abplattungsbereich 6 gebildet und dieser erste Stauchungsbereich anschließend zum ersten gesonderten Abplattungsbereich 6 verformt. Anschließend wird ein zweiter Stauchungsbereich für den zweiten Abplattungsbereich 6 einer Abplattung 3 gebildet und anschließend zum zweiten Abplattungsbereich 6 umgeformt. Der Zwischenbereich 7 wird anschließend ebenfalls durch Abplatten gebildet, wobei entweder der Querstab 2 in dem den Zwischenbereich 7 bildenden Bereich gar nicht angestaucht wird oder eine nur verhältnismäßig geringfügige Durchmesservergrößerung durch Stauchen erhält.

Die Fläche eines durch die Achse eines Nietloches 4 gelegten und dabei parallel zur Bandlaufrichtung 8 ausgerichteten Querschnitts eines gesonderten Abplattungsbereiches 6 ist entweder gleich oder etwas größer als die Querschnittsfläche des Zwischenbereiches 7 in einem Parallelschnitt zur Bandlaufrichtung 8. Dabei hat der Zwischenbereich 7 eine über seine gemessene Länge quer zur Bandlaufrichtung 8 annähernd gleichbleibende Breite.

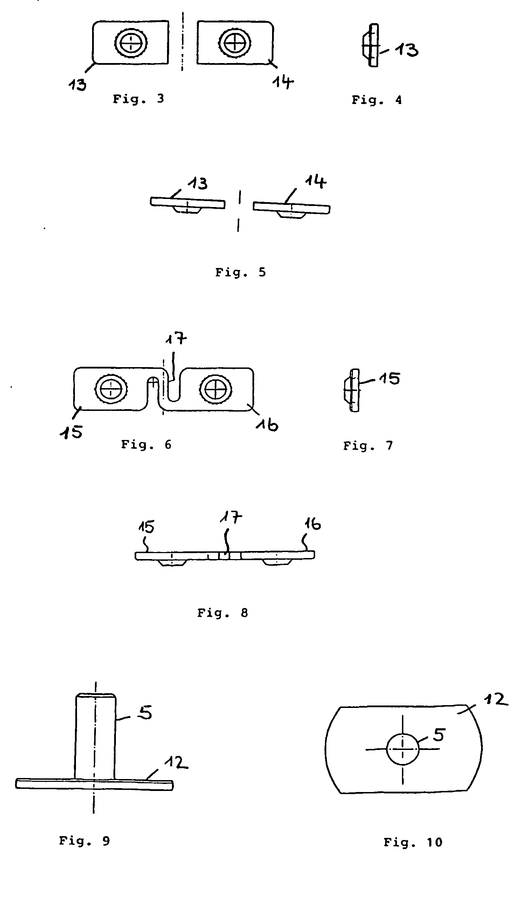

Auf der den Querstäben 2 abgewandten Seite der Trägerriemen 1 weisen die Niete 5 jeweils gesonderte Abstützungen auf, die einem Durchziehen der Niete durch die Trägerriemen 1 unter Belastung entgegenwirken. Die besonderen Abstützungen können von stark vergrößerten Nietköpfen 12 (Fig. 9 und 10) oder auch von gesonderten, von ihrem zugeordneten Niet 5 jeweils durchgriffenen Nietplattenteilen 13,14 (Fig. 3 bis 5) gebildet sein.

Eine besondere Ausführungsform sieht Nietplattenteile 15,16 vor, die durch einen Übergangsteil 17 integral verbunden sind, der Relativbewegungen der Nietplattenteile 15,16 zueinander aufgrund elastischer Verformung ermöglicht. Dieser Übergangsteil 17 ist zu diesem Zweck von einem zumindest bereichsweise bogenförmig verlaufenden, bei dem dargestellten Beispiel in S-Form ausgeführten Steg gebildet, der es ermöglicht, daß sich die Nietplattenteile 15,16 in ihrem gegenseitigen Abstand verändern und dadurch Bewegungen der Niete beim Arbeiten der Nietverbindungen unter Belastung anpassen können.

Durch diese gesonderte Abstützung der Niete auf der den Querstäben 2 abgewandten Seite der Trägerriemen 1 lassen die Abplattungen 3 in der erfindungsgemäßen Ausbildung mit den Teilen 6 und 7 Biegeverformungen der Querstäbe nicht nur parallel zur Oberseite der Trägerriemen 1, sondern auch senkrecht zur Oberseite der Trägerriemen 1 zu mit der Folge, daß sowohl die Querstäbe 2 als auch deren Nietverbindungen mit den Trägerriemen 1 eine wesentlich höhere Standfestigkeit erreichen.

## Patentansprüche

1. Förderband, insbesondere Siebförderband für Hackfruchterntemaschinen, mit zumindest zwei parallel zueinander angetrieben umlaufenden Trägerriemen (1), die untereinander durch in Abständen über die Länge der Trägerriemen (1) verteilt angeordnete Querstäbe (2) verbunden sind, die mit Abplattungen (3) versehen und im Bereich der Abplattungen (3) mit dem Trägerriemen (1) mit Nieten (5) vernietet sind, **dadurch gekennzeichnet, daß** die Niete (5) auf der den Querstäben (2) abgewandten Seite des Trägerriemens (1) durch von ihrem Niet durchgriffenen Nietplattenteilen (13, 14, 15,16) abgestützt sind, die durch einen Übergangsteil (17) integral verbunden sind, der Relativbewegungen der Nietplattenteile (15,16) zueinander unter elastischer Verformung ermöglicht.

2. Förderband nach Anspruch 1, **dadurch gekennzeichnet, daß** der Übergangsteil (17) von einem in bereichsweise bogenförmig verlaufenden Steg gebildet ist.

3. Förderband nach Anspruch 1 oder 2, **dadurch gekennzeichnet, daß** jeder Niet (5) von einem gesonderten Abplattungsbereich (6) umgeben ist und zwischen den Abplattungsbereichen (6) benachbarter Niete (5) ein ebenfalls abgeplatteter Zwischenbereich (7) mit gleichem oder geringerem Biegeverformungswiderstand vorgesehen ist.

4. Förderband nach einem der Ansprüche 1 bis 3, **dadurch gekennzeichnet, daß** die die Niete umgebenden, gesonderten Abplattungsbereiche und/oder der Zwischenbereich einem Mittelriemen zugeordnet sind.

5. Förderband nach einem der Ansprüche 3 oder 4, **dadurch gekennzeichnet, daß** der Zwischenbereich (7) eine gleiche oder geringere Querschnittsabmessung aufweist.

6. Förderband nach einem der Ansprüche 3 bis 5, **dadurch gekennzeichnet, daß** der Zwischenbereich (7) ober- und unterseitig mit den Ober- und Unterseiten der benachbarten Abplattungsbereiche (3) fluchtet und in Bandlaufrichtung (8) eine geringere Breite aufweist.

7. Förderband nach einem der Ansprüche 3 bis 6, **dadurch gekennzeichnet, daß** die Querschnittsfläche der die Nieten (5) umgebenden, gesonderten Abplattungsbereiche (6) in einem parallel zur Bandlaufrichtung (8) durch die Nietlochhauptachse verlaufenden Schnitt gleich oder größer ist als die Querschnittsfläche des Zwischenbereichs (7) in einem Parallelschnitt durch diesen.

8. Förderband nach einem der Ansprüche 3 bis 7, **dadurch gekennzeichnet, daß** der Zwischenbereich (7) eine über seine Länge annähernd gleichbleibende Breite aufweist.

## Claims

1. Conveyor belt, and in particular an openwork conveyor belt for root crop harvesting machines, having at least two supporting sub-belts (1) which are driven and circulate parallel to one and which are connected together by transverse bars (2), which transverse bars (2) are arranged to be distributed at intervals along the length of the supporting sub-belts (1), are provided with flattenings (3) and are riveted to the supporting sub-belt (1) with rivets (5) in the region of the flattenings (3), **characterised in that** the rivets (5) are supported, on the side of the supporting sub-belt (1) remote from the transverse bars (2), by rivet-plate parts (13, 14, 15, 16) whose rivets pass through them and which are integrally connected by a transitional part (17) which makes relative movements of the rivet-plate parts (15, 16) possible by deforming elastically.

2. Conveyor belt according to claim 1, **characterised in that** the transitional part (17) is formed by a cross-member which extends in an arcuate shape in a region or regions.

3. Conveyor belt according to claim 1 or 2, **characterised in that** each rivet (5) is surrounded by a separate flattened portion (6) and there is provided, between the flattened portions (6) for adjacent rivets (5), an intervening portion (7), likewise flattened, which has the same or a lower resistance to deformation in bending.

4. Conveyor belt according to one of claims 1 to 3, **characterised in that** the separate flattened portions surrounding the rivets, and/or the intervening portion, are associated with a central sub-belt.

5. Conveyor belt according to either of claims 3 and 4, **characterised in that** the intervening portion (7) is of the same or smaller cross-sectional dimensions.

6. Conveyor belt according to one of claims 3 to 5, **characterised in that**, at the top and bottom, the intervening portion (7) is flush with the top and bottom faces of the adjacent flattened portions (3) and is smaller in width in the direction of travel (8) of the conveyor belt.

7. Conveyor belt according to one of claims 3 to 6, **characterised in that**, in a plane of section extending, parallel to the direction of travel (8) of the conveyor belt, through the main axis of a rivet hole, the cross-sectional area of the separate flattened portions (6) surrounding the rivets (5) is equal to or greater than the cross-sectional area of the intervening portion (7) in a parallel plane of section through the latter.

8. Conveyor belt according to one of claims 3 to 7, **characterised in that** the intervening portion (7) is of approximately constant width along its length.

## Revendications

1. Bande transporteuse, en particulier bande transporteuse à tamis pour des moissonneuses de plantes sarclées, avec au moins deux courroies porteuses (1) périphériques, entraînées parallèlement l'une à l'autre qui sont reliées entre elles par des barres transversales (2) disposées réparties à distances sur la longueur des courroies porteuses (1), lesquelles sont pourvues d'aplatissement (3) et sont rivées dans la zone des aplatissements (3) avec la courroie porteuse (1) par des rivets (5), **caractérisée en ce que** les rivets (5) sont en appui sur le côté éloigné des barres transversales (2) de la courroie porteuse (1) par des parties de plaque rivée (13, 14, 15, 16) traversées par leur rivet, lesquelles sont intégralement reliées par un élément de transition (17) qui permet des mouvements relatifs des parties de plaque rivée (15, 16) l'une par rapport à l'autre sous déformation élastique.

2. Bande transporteuse selon la revendication 1, **caractérisée en ce que** l'élément de transition (17) est formé par une branche s'étendant par endroits en forme d'arc.

3. Bande transporteuse selon la revendication 1 ou 2, **caractérisée en ce que** chaque rivet (5) est entouré par une zone d'aplatissement (6) distincte et entre les zones d'aplatissement (6) de rivets (5) contigus est prévue une zone intermédiaire (7) également aplatie avec une résistance à la déformation par flexion identique ou plus faible.

4. Bande transporteuse selon l'une quelconque des revendications 1 à 3, **caractérisée en ce que** les zones d'aplatissement distinctes, entourant les rivets et/ou la zone intermédiaire est associée à une courroie médiane.

5. Bande transporteuse selon l'une quelconque des revendications 3 ou 4, **caractérisée en ce que** la zone intermédiaire (7) présente une dimension de section identique ou plus petite.

6. Bande transporteuse selon l'une quelconque des revendications 3 à 5, **caractérisée en ce que** la zone intermédiaire (7) s'aligne côté supérieur et inférieur avec les faces supérieures et inférieures des zones d'aplatissement (3) contigües et présente dans le sens de marche de la bande (8) une largeur plus faible.

7. Bande transporteuse selon l'une quelconque des revendications 3 à 6, **caractérisée en ce que** la superficie de section des zones d'aplatissement (6) distinctes, entourant les rivets (5) dans une coupe s'étendant parallèlement au sens de marche de la bande (8) par l'axe principal du trou de rivet est égale ou supérieure à la superficie de section de la zone intermédiaire (7) dans une coupe parallèle de celle-ci.

8. Bande transporteuse selon l'une quelconque des revendications 3 à 7, **caractérisée en ce que** la zone intermédiaire (7) présente une largeur approximativement constante sur toute sa longueur.
